# EUROPÄISCHE PATENTSCHRIFT

(11) **EP 0 482 482 B1**
(45) Veröffentlichungstag und Bekanntmachung des Hinweises auf die Patenterteilung: **15.03.1995**
(21) Anmeldenummer: 91117601.4
(22) Anmeldetag: 16.10.1991
(51) Int. Cl.: G01N 7/14, G01N 27/403

(54) **Vorrichtung zur Messung des Wasserdampfpartialdrucks**
Equipment for the measurement of the partial pressure of water vapour
Dispositif pour la mesure de la pression partielle de vapeur d'eau

(30) Priorität: 26.10.1990 DE 4034185
(43) Veröffentlichungstag der Anmeldung: 29.04.1992
(73) Patentinhaber: Wilhelm Lambrecht GmbH, D-37085 Göttingen (DE)
(72) Erfinder: Bleek, Ulrich, Dipl.-Ing., O-1597 Babelsberg (DE); Obiera, Axel, O-1580 Potsdam (DE)
(74) Vertreter: Rehberg, Elmar, Dipl.-Ing.

(56) Entgegenhaltungen:
- DE-A- 1 598 993
- DE-A- 2 416 179
- DE-A- 3 633 016

## Beschreibung

Die Erfindung bezieht sich auf eine Vorrichtung zur Messung des Wasserdampfpartialdrucks in Gemischen aus Wasserdampf und Gasen mit einer elektrolytischen Zelle, einem die Temperatur des Elektrolyten bestimmenden Meßfühlers und einer Heizung, wobei die Zelle mit einer keine merkliche Erwärmung bewirkenden Wechselspannung beaufschlagt ist, der durch die Wechselspannung hervorgerufene Wechselstrom die Heizleistung der Heizung steuert, und wobei der Elektrolyt in direktem thermischen Kontakt auf dem Meßfühler angeordnet ist. Unter einem Meßfühler ist in diesem Zusammenhang die Einheit aus einem temperaturempfindlichen Element und einer Verkleidung zu verstehen. Die Verkleidung dient dabei dazu, das temperaturempfindliche Element vor mechanischen, elektrischen und chemischen Einflüssen zu schützen.

Die Leitfähigkeit eines Elektrolyten hängt von der relativen Konzentration des Wassers ab. Bei geringen Feuchtigkeitskonzentrationen gilt, daß die Leitfähigkeit mit dem Wasseranteil steigt. Wird der Elektrolyt in Abhängigkeit von seiner Leitfähigkeit erwärmt, so dampft ein Teil seines Wassergehalts ab. Dieser Vorgang läuft solange fort, bis der Elektrolyt wasserlos ist, es sei denn, der Elektrolyt kann aus der Umgebung Wasserdampf absobieren. Wenn der Elektrolyt von einem Gemisch aus Wasserdampf und Gasen umgeben ist, stellt sich letztlich ein Gleichgewicht zwischen der abgegebenen und der aufgenommenen Wasserdampfmenge ein. Dieses Gleichgewicht ist durch eine bestimmte Temperatur des Elektrolyten gekennzeichnet. Diese Temperatur ist ein direktes Maß für den Wasserdampfpartialdruck in dem Gemisch aus Wasserdampf und Gasen.

Eine Vorrichtung zur Messung des Wasserdampfpartialdrucks mit den eingangs beschriebenen Merkmalen ist aus der DE-OS 24 16 179 bekannt. Dort steht die Heizung in direktem, thermischen Kontakt zu dem Elektrolyten und somit auch zu dem Meßfühler. Der Elektrolyt wird daher durch Wärmeleitung von der Heizung erwärmt. Um mittels Wärmeleitung Heizleistung übertragen zu können, sind Temperaturgradienten erforderlich. Diese Temperaturgradienten führen bei der Vorrichtung gemäß der DE-OS 24 16 179 zu unerwünschten Effekten. Als Gleichgewichtstemperatur wird eine Temperatur gemessen, die eigentlich nur der Heizung und nicht dem Elektrolyten zuzuordnen ist. Der Temperaturgradient führt zu einem Thermotransport in dem Elektrolyten, so daß keine homogene und damit definierte Verteilung des Elektrolyten mehr vorliegt. Das Gesamtgleichgewicht, welches zur Messung des Wasserdampfpartialdrucks zu erreichen ist, setzt auch voraus, daß das den Elektrolyten umgebende Gemisch auf der Gleichgewichtstemperatur ist. Da dieses Gemisch hier allein über den Elektrolyten indirekt erwärmt wird, befindet sich nur eine sehr kleine Grenzschicht des Gemisches mit im Gleichgewicht. All diese Effekte führen dazu, daß die Vorrichtung gemäß der DE-OS 24 16 179 sich als regelungstechnisch aufwendig erweist. Schon bei nur geringfügig unzulänglicher Abstimmung zeigt sie ein unbefriedigendes Einschwingverhalten. Der Gleichgewichtszustand wird nur nach langen Zeiten oder überhaupt nicht erreicht.

Aus der DE-PS 1 598 993 ist eine Vorrichtung zur Messung des Wasserdampfpartialdrucks bekannt, die sich von der eingangs beschriebenen Art dadurch unterscheidet, daß der Meßfühler nicht in direktem, thermischen Kontakt zu dem Elektrolyten angeordnet ist. Auch die Heizung steht weder in direktem, thermischen Kontakt zu dem Elektrolyten, noch zu dem Meßfühler. Der thermische Kontakt zwischen dem Meßfühler, dem Elektrolyten und der Heizung wird durch das Gemisch aus Wasserdampf und Gasen vermittelt. Die Erwärmung des Elektrolyten erfolgt somit indirekt. Die Heizung erwärmt das Gemisch, der Motor wälzt das Gemisch um, dieses gelangt in die Nähe des Elektrolyten und gibt dort einen Teil der aufgenommenen Wärmemenge wieder ab. Ebenso verläuft der Vergleich der Temperatur zwischen dem Elektrolyten und dem Meßfühler. Um eine homogene Temperaturverteilung innerhalb der Vorrichtung zu erreichen, ist es bei einer Vorrichtung gemäß der DE-PS 1 598 993 notwendig, das Gemisch unter eine turbulente Zwangsumwälzung zu setzen. Anderenfalls werden die Temperaturunterschiede zwischen dem Gemisch und dem Elektrolyten groß. Diese Temperaturunterschiede stehen dann potentiell aber auch zwischen dem Elektrolyten und dem Meßfühler und sind so als Maß für die Ungenauigkeit des gemessenen Wasserdampfpartialdrucks anzunehmen. Die turbulente Zwangsumwälzung des Gemisches führt auch dazu, daß sich die Heizung selbst nicht auf wesentlich höherer Temperatur als die weiteren Bestandteile der Vorrichtung befinden kann. Eine Wärmeübertragung von der Heizung auf den Elektrolyten erfolgt damit im wesentlichen über das Gemisch. Die turbulente Zwangsumwälzung des Gemisches bringt eklatante Nachteile mit sich. Der notwendige Motor mindert die Zuverlässigkeit der Vorrichtung. Durch die Luftströmungen an der Oberfläche des Elektrolyten, wird dieser erodiert. Die Reaktionsrate zwischen im Gemisch enthaltenen Schadstoffen und dem Elektrolyten wird stark heraufgesetzt, da immer die Maximalkonzentration der Schadstoffe an der Oberfläche des Elektrolyten vorliegt. Der Elektrolyt wird durch die turbulente Zwangsumwälzung des Gemisches zudem direkt abgetragen. Kleine Tröpfchen bzw. Kristallite werden an der Oberfläche von dem vorbeiströmenden Gemisch mitgerissen. Der Elektrolyt verteilt sich so in der gesamten Vorrichtung. Dies führt dazu, daß die Zelle häufig mit dem Elektrolyten beschickt werden muß. Dies alles steht einer Verwendung der Vorrichtung gemäß der DE-PS 1 598 993 für Langzeitmessungen entgegen. Vorrichtungen zur Messung des Wasserdampfpartialdrucks finden vorwiegend für meteorologische Zwecke Verwendung. Ihr Betrieb erfolgt häufig in Wetterhütten, die nur im Abstand von mehreren Monaten überprüft werden.

Aus beiden oben genannten Druckschriften ist es bekannt, als Elektrolyten für die elektrolytische Zelle Lithiumchlorid zu verwenden. Auch der Aufbau der elektrolytischen Zelle wird dort offenbart. Die Zelle weist ein mit Elektrolyt getränktes schlauchförmiges Gewebe auf, auf dessen Oberfläche ein Drahtelektrodenpaar aus Edelmetall bifilar und äquidistant aufgewickelt ist.

Der Erfindung liegt die Aufgabe zugrunde, eine Vorrichtung zur Messung des Wasserdampfpartialdrucks der eingangs beschriebenen Art derart weiterzubilden, daß eine hohe Meßgenauigkeit bei großer Langzeitzuverlässigkeit gewährleistet werden kann.

Erfindungsgemäß wird dies dadurch erreicht, daß die Heizung geometrisch so um die elektrolytische Zelle angeordnet ist und eine derartige Ausdehnung aufweist, daß sich ein homogenes Strahlungsfeld über die gesamte Zelle ergibt, und daß die Heizung relativ zu einer Führung für das Gasgemisch durch die Vorrichtung so angeordnet ist, daß das Gemisch im wesentlichen durch Konvektion erwärmt wird, während der Elektrolyt im wesentlichen durch Strahlung erwärmt wird. Die Heizung überträgt ihre Heizleistung über zwei verschiedene Wege auf den Elektrolyten und das Gemisch. Der Elektrolyt wird durch Strahlung erwärmt. Mittels Wärmestrahlung ist es möglich, in kurzer Zeit recht große Wärmemengen zu übertragen. Hierzu ist zwar ein ausgeprägter Temperaturunterschied zwischen der Heizung einerseits und dem Elektrolyten andererseits notwendig, doch wirkt sich dieser nicht negativ aus, da die Heizung nicht in direktem, thermischen Kontakt zu dem Elektrolyten oder dem Meßfühler steht. Wärmestrahlung hat zudem den Vorteil, daß sie von Gasen in der Regel nicht absorbiert wird. Die Wärmestrahlung kann daher durch das Gemisch hindurchtreten und ungeschwächt auf den Elektrolyten einwirken. Um den Elektrolyten im wesentlichen durch die Strahlung zu erwärmen, ist es selbstverständlich, die Heizung in gewisser Entfernung von diesem anzuordnen. Das Gemisch aus Wasserdampf und Gasen wird hingegen durch direkten Kontakt mit der Heizung erwärmt. Die erwärmten Anteile des Gemisches vermischen sich mit den nicht erwärmten, so daß das gesamte Gemisch durch natürliche Konvektion auf eine höhere Temperatur gebracht wird. Die hierbei auftretenden Strömungen sind laminar und erstrecken sich im wesentlichen in der Nähe der Heizung. Die Strömung an der Oberfläche des Elektrolyten findet sich in einem Minimum, welches gerade noch ausreicht, um den für eine kontinuierliche Messung des Wasserdampfpartialdruckes notwendigen Gemischaustausch durchzuführen. Der Elektrolyt wird durch diesen Austausch so gering wie möglich belastet. Für den Elektrolyten ergibt sich so eine große Haltbarkeit. Einflüsse durch Schadstoffe, die das Meßergebnis verfälschen können, treten erst nach sehr langen Zeiten auf. Diese Zeiten liegen weit über einem halben Jahr. Die neue Vorrichtung erweist sich als regelungstechnisch unkompliziert. Dies geht vor allem auf die stabile Gleichgewichtsgrenzschicht im Gemisch an der Grenze zum Elektrolyten zurück. Diese Grenzschicht wird durch die Strahlung, mit der der Elektrolyt erwärmt wird, nicht beeinflußt. Die Strahlung tritt durch die Grenzschicht hindurch ohne Heizleistung abzugeben. Die stabile Gleichgewichtsgrenzschicht führt zu einem gut kalkulierbaren Einschwingverhalten. Kennzeichnend für das Einschwingverhalten sind kleine Zeitkonstanten, d. h. der Gleichgewichtszustand kann schon nach kurzen Zeiten erreicht werden. Bei der neuen Vorrichtung finden keine beweglichen Teile Verwendung. Ein unerwünschter Verlust an Zuverlässigkeit wird so vermieden. Es versteht sich, daß, sofern das temperaturempfindliche Element des Meßfühlers in seinen Ausmaßen über die der elektrolytischen Zelle hinausgeht, auch das temperaturempfindliche Element im Homogenitätsbereich des Strahlungsfeldes der Heizung angeordnet sein muß. Anderenfalls wären Fehlmessungen der Temperatur vorprogrammiert. Die Temperaturdifferenz zwischen der Heizung und dem Elektrolyten, die für eine ausreichende Strahlung notwendig ist, hängt von dem Abstand der Heizung zum Elektrolyten ab. Üblicherweise werden Temperaturunterschiede von etwa 100 Kelvin mit der gewünschten Wirkung verbunden sein.

Der Elektrolyt kann Lithiumchlorid sein. Lithiumchlorid hat sich für Vorrichtungen zur Messung des Wasserdampfpartialdruckes mit einer elektrolytischen Zelle, als besonders geeignet erwiesen.

Die Zelle kann eine mit dem Elektrolyten getränkte Glasgewebeschicht aufweisen, auf deren Oberfläche ein Elektrodenpaar aus bifilar und äquidistant gewickeltem Edelmetalldraht angeordnet ist. Eine derartige Ausführung der elektrolytischen Zelle hat sich durch ihren einfachen Aufbau und ihre Zuverlässigkeit bewährt.

Der Meßfühler kann stabförmig sein, wobei die Zelle auf dem stabförmigen Meßfühler ringförmig und koaxial angeordnet ist, die Heizung den Meßfühler koaxial umgibt und wobei die Stabachse des Meßfühlers parallel zur Schwerkraft verläuft. Auf diese Weise wird ein zylindrischer Gesamtaufbau erzielt. So können zum einen die Geometrieforderungen für das Strahlungsfeld leicht erfüllt werden, zum anderen ist auch das Strömungsfeld des durch die Heizung erwärmten Gemisches symmetrisch zu der Zelle und damit zum Elektrolyten.

Die Heizung kann Heizdrähte oder Heizstreifen aufweisen, die äquidistant untereinander und parallel zu der Stabachse des Meßfühlers auf einem Zylindermantel angeordnet sind. Mit Heizdrähten oder Heizstreifen läßt sich problemlos eine Heizung realisieren, mit der die notwendigen Temperaturen schnell erreicht werden können. Die Anordnung der Heizstreifen erfüllt die Forderungen für die Geometrie des Strahlungsfelds.

Die Heizung kann von einem an beiden Enden verschlossenen, mit Durchbrechungen versehenen, koaxialen Rohr umgeben sein, wobei um dieses Rohr wiederum ein koaxiales Gemischführungsrohr angeordnet ist. Mit dieser Anordnung kann ein Kamineffekt für den notwendigen Durchsatz an Gemisch durch die Vorrichtung genutzt werden. Das von der Heizung erwärmte Gemisch steigt auf und zieht beim Verlassen der Vorrichtung neues Gemisch in diese hinein. Durch die Anordnung des die Heizung umgebenden Rohres und des Gemischführungsrohrs für die Strömung durch die Vorrichtung in zwei Teilströme aufgeteilt. Der Hauptstrom geht durch die Vorrichtung hindurch, ohne am Meßvorgang beteiligt zu sein. Er stellt nur die Gemischmengen zur Verfügung, die in einem Teilstrom zur Messung dienen. Der Teilstrom tritt durch die Durchbrechungen in das die Heizung umgebende Rohr hinein und gelangt mittels natürlicher Konvexion sowie Diffusion an die Oberfläche des Elektrolyten. Der Teilstrom zeichnet sich durch eine langsame Bewegung aus. Die Durchbrechungen sind natürlich auch an den beiden verschlossenen Enden vorsehbar.

Die Durchbrechungen können axiale durchgehende Schlitze sein. Die durchgehenden Schlitze sind als Durchbrechungen besonders geeignet, da sie der Strömungsrichtung durch die Vorrichtung gut angepaßt sind.

Eine Auswerteelektronik für den Meßfühler und eine Steuerelektronik für die Heizung können innerhalb der Führung für das Gemisch und oberhalb der Heizung angeordnet sein. Durch die Verlustleistung der Auswerteelektronik bzw. der Steuerelektronik kann der Kamineffekt der Heizung unterstützt werden. Die Verlustleistung der Auswerte- bzw. Steuerelektronik wird in Form von Wärme an das Gemisch abgegeben. Diese Wärmeabgabe fördert zwar den Kamineffekt, ist aber bei der Messung des Wasserdampfpartialdrucks nicht störend, da die Wärmeabgabe relativ zum Gemischstrom hinter der Messung des Wasserdampfpartialdrucks erfolgt.

Die Auswerte- oder Steuerelektronik kann einen zusätzlicher Verbraucher aufweisen. Bei verlustleistungsarmer Auswerte- bzw. Steuerelektronik kann es sinnvoll sein, den Kamineffekt und damit den Gemischdurchsatz durch die Vorrichtung durch einen zusätzlichen Verbraucher mit entsprechender Wärmeabgabe zu steigern.

Der Meßfühler kann als temperaturempfindliches Element einen Platinmeßwiderstand aufweisen. Ein Platinmeßwiderstand ermöglicht Ausgangssignale, die zur Temperaturbestimmung besonders günstig auszuwerten sind.

Die Erfindung wird anhand einiger Ausführungsbeispiele im Folgenden näher erläutert und beschrieben. Es zeigen:
- Figur 1: eine erste Ausführungsform der Vorrichtung im Querschnitt,
- Figur 2: die Detailansicht einer zweiten Ausführungsform der Vorrichtung und
- Figur 3: eine weitere Ausführungsform der Vorrichtung in schematischer, perspektivischer Darstellung.

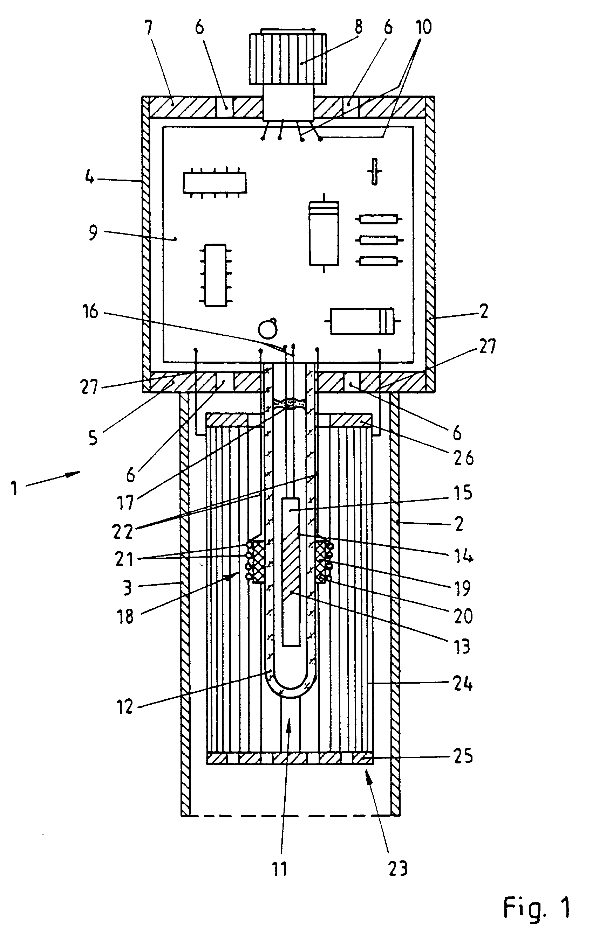

Die in Figur 1 dargestellte Ausführungsform der Vorrichtung 1 weist ein rotationssymmetrisches Gehäuse 2 auf, das in ein Gemischführungsrohr 3 und einen Rohrabschnitt 4 aufgeteilt ist. Die Symmetrieachse der Vorrichtung 1 verläuft beim Betreiben der Vorrichtung 1 parallel zur Schwerkraft. Das Gemischführungsrohr 3 ist an seinem unteren Ende offen. An seinem oberen Ende ist es an der Verbindungsplatte 5 befestigt. Die Verbindungsplatte 5 verschließt das Gemischführungsrohr 3 bis auf einige Durchtrittsöffnungen 6. Durch die Durchtrittsöffnungen 6 ist der Innenraum des Gemischführungsrohrs 3 mit dem Innenraum des Rohrabschnitts 4 verbunden. Der Rohrabschnitt 4 ist ebenfalls an der Verbindungsplatte 5 befestigt und wird an seinem unteren Ende durch die Verbindungsplatte weitgehend verschlossen. Das obere Ende des Rohrabschnitts 4 wird von einer Abdeckplatte 7 nahezu vollständig abgedeckt. Die Abdeckplatte 7 weist, genau wie die Verbindungsplatte 5, die Durchtrittsöffnungen 6 auf. In der Abdeckplatte 7 ist ein Anschlußstück 8 gelagert. Das Anschlußstück 8 dient zum Anschließen der Vorrichtung 1 an eine hier nicht dargestellte Aufzeichnungsanlage für die Meßwerte und eine Spannungsquelle. Die Ausbildung des Anschlußstücks 8 ist derart, daß dieses mit denen herkömmlicher Vorrichtungen zur Messung des Wasserdampfpartialdrucks übereinstimmt. Über das Anschlußstück 8 erfolgt auch die Versorgung der Vorrichtung 1 mit elektrischer Energie. Unterhalb der Abdeckplatte 7 befindet sich im Innern des Rohrabschnitts 4 eine Leiterplatte 9. Die Leiterplatte 9 ist über Leitungen 10 mit dem Anschlußstück 8 verbunden.

Innerhalb des Gemischführungsrohrs 3 ist ein Meßfühler 11 angeordnet. Der Meßfühler 11 ist von seinen äußeren Abmessungen her stabförmig und seine Stabachse fällt mit der Symmetrieachse des Gemischführungsrohrs 3 zusammen. Der Meßfühler 11 weist ein Glasrohr 12 auf, das in der Verbindungsplatte 5 gelagert ist. An seinem unteren, der Verbindungsplatte 5 abgekehrten Ende ist das Glasrohr 12 zugeschmolzen. Das Glasrohr 12 ragt durch die Verbindungsplatte 5 nicht wesentlich in den Rohrabschnitt 4 hinein. Innerhalb des Glasrohrs 12 befindet sich ein temperaturempfindliches Element 13. Die vorliegende Vorrichtung weist als temperaturempfindliches Element 13 einen Platinmeßwiderstand 14 auf, der als dünner Draht auf einen Träger 15 aufgewickelt ist. Der Platinmeßwiderstand 14 ist über Meßleitungen 16 mit der Leiterplatte 9 verbunden. Die Meßleitungen 16 sind mit einer Verklebung 17 im Innern des Glasrohrs 12 fixiert. Die Verklebung 17 schließt das Innere das Glasrohrs 12 luftdicht ab. Der Platinmeßwiderstand 14 ist so vor elektrischen, chemischen und mechanischen Einwirkungen rundum geschützt. Ein derart ausgebildeter Meßfühler 11 entspricht als Ganzes einem handelsüblichen Bauteil. Auf der Außenwandung des Glasrohrs 12 ist eine elektrolytische Zelle 18 angeordnet. Die elektrolytische Zelle 18 weist eine schlauchförmige Glasgewebeschicht 19 auf. Die Glasbewebeschicht 19 erstreckt sich symmetrisch zur Ausdehnung des temperaturempfindlichen Elements 13. Sie ist mit einem Elektrolyten 20 getränkt. Auf der Oberfläche der Glasgewebeschicht 19 befindet sich ein Elektrodenpaar 21, das aus bifilar und äquidistant gewickeltem Edelmetalldraht besteht. Das Elektrodenpaar 21 ist über Zuleitungen 22 mit der Leiterplatte 9 verbunden. Die elektrolytische Zelle 18 und der Meßfühler 11 sind koaxial von einer Heizung 23 umgeben. Die Heizung 23 weist einen durchgehenden Heizdraht 24 auf, der vielfach zwischen einer unteren Halteplatte 25 und einer oberen Halteplatte 26 hin- und hergespannt ist. Der Heizdraht 24 verläuft dabei jeweils auf dem Zylindermantel eines imaginären Zylinders parallel zu dessen Achse. Die Achse des imaginären Zylinders fällt mit der Stabachse des Meßfühlers zusammen. Der Heizdraht ist über Versorgungsleitungen 27 mit der Leiterplatte verbunden. Die untere Halteplatte 25 schirmt die elektrolytische Zelle 18 nach unten hin teilweise ab. Die obere Halteplatte 26 erfüllt keine gesonderte Abschirmfunktion.

Die Funktionsweise der Vorrichtung 1 basiert auf der Leitfähigkeit des Elektrolyten 20 in der elektrolytischen Zelle 18. Die Leitfähigkeit des Elektrolyten 20 hängt von seinem relativen Wassergehalt ab. Der Wassergehalt des Elektrolyten 20, von dem ausgegangen wird, ist gering, so daß die Leitfähigkeit des Elektrolyten 20 mit dem relativen Wassergehalt zunimmt. Die Leitfähigkeit des Elektrolyten 20 in der elektrolytischen Zelle 18 wird mittels des Elektrodenpaars 21 bestimmt. Das Elektrodenpaar 21 wird über die Zuleitungen 22 von der Leiterplatte 9 aus mit einer Wechselspannung beaufschlagt, die so gering ist, daß sie keine signifikante Erwärmung des Elektrolyten bewirkt. Der durch die Wechselspannung zwischen dem Elektrodenpaar 21 hervorgerufene Strom durch den Elektrolyten ist ein direktes Maß für die Leitfähigkeit des Elektrolyten 20. Dieser Strom durch den Elektrolyten fließt auch durch die Zuleitungen 22 des Elektrodenpaares 21. Auf der Leiterplatte 9 ist eine Steuerelektronik vorhanden, die in Abhängigkeit von dem Strom durch den Elektrolyten einen Strom steuert, der über die Versorgungsleitungen 27 durch den Heizdraht 24 fließt. Die von dem Heizdraht 24 ausgehende Wärmestrahlung wirkt auf den Elektrolyten 20 in der elektrolytischen Zelle 18 ein, so daß sich der Elektrolyt 20 erwärmt. Hierdurch verdampft ein Teil des Wassergehalts des Elektrolyten 20 und die Leitfähigkeit des Elektrolyten nimmt ab. Mit der abnehmenden Leitfähigkeit geht auch die Strahlungsleistung des Heizdrahts 24 und damit die Erwärmungsrate des Elektrolyten 20 zurück. Diese Vorgänge allein würden zu einer sich zwar verlangsamenden, letztlich aber vollständigen Austrocknung des Elektrolyten 20 führen. Der Elektrolyt 20 nimmt aber aus seiner Umgebung ständig Wasserdampf auf. Die Umgebung des Elektrolyten 20 kann irgendein Gemisch aus Wasserdampf und Gasen sein, in der Regel wird es sich aber um Luft handeln. Der Wasserdampfpartialdruck in dem Gemisch bestimmt die Rate, mit der der Elektrolyt aus seiner Umgebung Feuchtigkeit aufnehmen kann. Letztlich wird es im Elektrolyten zu einem Gleichgewicht zwischen der abgegebenen und der aufgenommenen Feuchtigkeitsmenge kommen. Dieses Gleichgewicht wird durch eine bestimmte Temperatur gekennzeichnet. Der Bereich der Gleichgewichtstemperatur erstreckt sich hierbei über die elektrolytische Zelle 18, den Meßfühler 11 oder zumindest das temperaturempfindliche Element 13 und eine Grenzschicht des Gemischs, die den Elektrolyten 20 umgibt. Die Erwärmung dieser Grenzschicht erfolgt nur zu einem geringen Anteil durch den Elektrolyten. Vorwiegend erfolgt die Erwärmung der Grenzschicht, indem das Gemisch durch den Heizdraht 24 erwärmt wird, bevor es in die Nähe des Elektrolyten 20 kommt. Während der Elektrolyt 20 im wesentlichen mittels der von dem Heizdraht 24 ausgehenden Wärmestrahlung beheizt wird, erfolgt die Beheizung des Gemischs unter Zuhilfenahme des direkten Wärmeübertrags vom Heizdraht und der daraus resultierenden natürlichen Konvektion. Die durch den Heizdraht hervorgerufene natürliche Konvektion bewirkt zudem den Gemischdurchsatz durch die Vorrichtung 1. Die Vorrichtung 1 bildet als ganzes eine Art Kamin, in dem der Heizdraht 24 der Heizung 23 das Gemisch erwärmt, welches daraufhin aufsteigt und durch die Durchtrittsöffnungen 6 erst in den Rohrabschnitt 4 und dann aus der Vorrichtung 1 heraustritt, wobei neues Gemisch angesaugt wird. Der Kamineffekt wird durch die Verlustleistung der Steuerelektronik für die Heizung 23 und der Auswerteelektronik für den Meßfühler 11 vergrößert. Zum Erreichen eines gesteigerten Durchsatzes an Gemisch kann es sinnvoll sein, auf der Leiterplatte 9 einen zusätzlichen Verbraucher vorzusehen, der durch eine hohe Verlustleistung ausgezeichnet ist. Geeignet wäre beispielsweise eine Glühbirne. Der von der Vorrichtung 1 gelieferte Meßwert entspricht der Gleichgewichtstemperatur des Elektrolyten 20 bezüglich eines bestimmten Wasserdampfpartialdrucks in dem dem Elektrolyten 20 umgebenden Gemisch. Die Gleichgewichtstemperatur wird durch den elektrischen Widerstand des Platinmeßwiderstands 14 unter Zuhilfenahme der Meßleitungen 16 ermittelt. Hierzu ist auf der Leitplatte eine Auswerteelektronik vorgesehen. Die Meßwerte werden über die Leitungen 10 und das mit ihnen verbundene Anschlußstück 8 an die hier nicht dargestellte Aufzeichnungsanlage weitergegeben.

Die Strömung des Gemischs an der Oberfläche des Elektrolyten 20 beruht nur auf natürlicher Konvektion. Die Strömung ist laminar und eine Grenzschicht des Gemischs um den Elektrolyten im Gleichgewicht mit dem Elektrolyten kann stets in ausreichender Dicke gewährleistet werden.

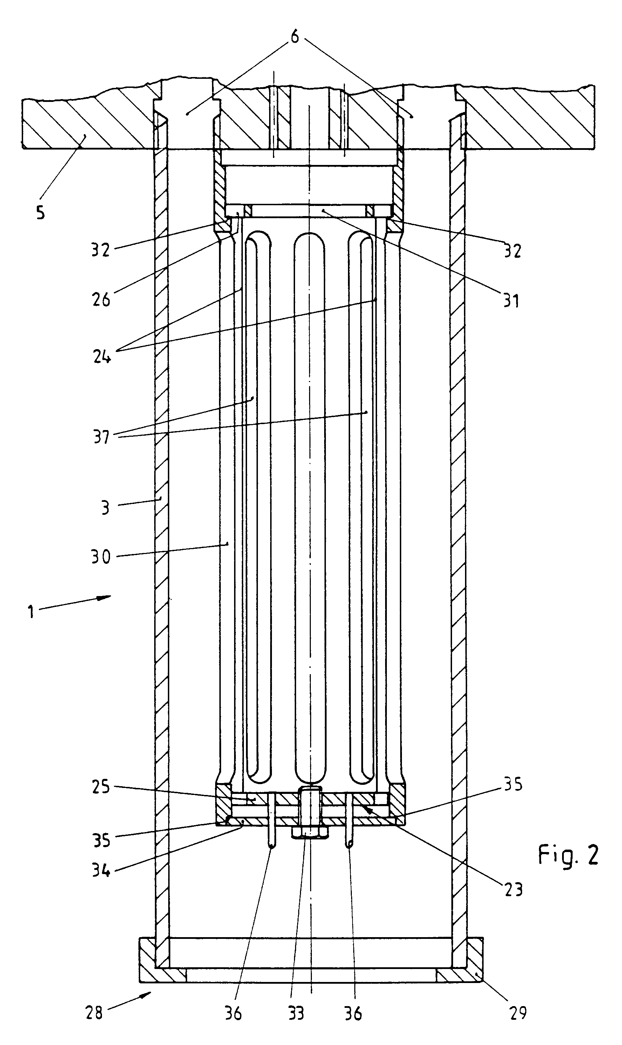

Figur 2 zeigt das Detail einer zweiten Ausführungsform der Vorrichtung 1, die nur in den hier dargestellten Bauelementen von der Ausführungsform gemäß Figur 1 abweicht. In die Verbindungsplatte 5 ist das Gemischführungsrohr 3 eingeschraubt. Das untere Ende des Gemischführungsrohrs 3 wird durch einen Deckel 28 abgeschlossen, der einen Haltering 29 und in dessen Öffnung ein hier nicht dargestelltes Fliegengitter aufweist. Mit dem Fliegengitter sollen Insekten von dem Innern der Vorrichtung 1 ferngehalten werden. Das Fliegengitter behindert den Durchsatz von Gemisch, dessen Wasserdampfpartialdruck gemessen werden soll, nur unwesentlich. Im Innern des Gemischführungsrohrs 3 ist ein zu diesem koaxiales Rohr 30 angeordnet. Das Rohr 30 ist ebenfalls in die Verbindungsplatte 5 eingeschraubt. Das Rohr 30 dient zur Lagerung der unteren 25 und oberen Halteplatte 26 für den Heizdraht 24. Die untere 25 und die obere Halteplatte 26 sind als Zahnräder mit rechteckigen Zähnen ausgebildet. Der Heizdraht 24 führt jeweils oberhalb der oberen Halteplatte 26 bzw. unterhalb der unteren Halteplatte 25 um diese Zähne herum. Die obere Halteplatte 26 weist eine zentrale Öffnung 31 auf, durch die der Meßfühler 11 mit der elektrolytischen Zelle 18 gemäß Figur 1 in die Heizung 23 hineinragt. Die obere Halteplatte 26 liegt an einer umlaufenden Schulter 32 im Innern des Rohrs 30 an. Die untere Halteplatte 25 wird von einer Schraube 33 gehalten, die sich an einer Gegenplatte 34 abstützt. Die Gegenplatte 34 liegt an dem umlaufenden Vorsprung 35 im Innern des Rohrs 30 an. Der umlaufende Vorsprung 35 entspricht der umlaufenden Schulter 32, an der die obere Halteplatte 26 anliegt. Durch Verdrehen der Schraube 33 kann der Abstand der unteren Halteplatte 25 zu der oberen Halteplatte 26 variiert werden. Damit läßt sich der Heizdraht 24 durch Verdrehen der Schraube 33 spannen. So erhalten auch die beiden Halteplatten 25, 26 sowie die Gegenplatte 34 eine vollständig definierte Lage. Mit der unteren Halteplatte 25 sind Anschlüsse 36 für den Heizdraht 24 verbunden. Die Anschlüsse 36 ragen durch die Gegenplatte 34 hindurch. An den Anschlüssen 36 sind die Versorgungsleitungen 27 für die Heizung 23 gemäß Figur 1 zu befestigen.

Das Rohr 30 erfüllt mehrere Funktionen. Zum einen dient es als Träger für die Heizung 23, zum anderen erfüllt es die Aufgabe eines Reflektors für die vom Heizdraht 24 ausgehende Strahlung auf die Symmetrieachse des Rohrs 30 und damit die elektrolytische Zelle 18 gemäß Figur 1 hin. Desweiteren teilt das Rohr 30 den Strom von Gemisch durch die Vorrichtung 1 in zwei Teilströme. Der Hauptstrom tritt nur durch das Gemischführungsrohr 3, aber nicht durch das Rohr 30 hindurch. Er tritt durch das Fliegengitter im Deckel 28 in das Rohr 3 ein und verläßt dieses durch die Öffnungen 6 in der Verbindungsplatte 5. Von dem Hauptstrom wird ein Teilstrom gespeist, der durch axiale, durchgehende Schlitze 37 in das Rohr 30 eintritt. Dabei wird das Gemisch nahe an dem Heizdraht 24 vorbeigeführt und so erwärmt, bevor es zu der elektrolytischen Zelle 18 und damit zu dem Elektrolyten 20 gemäß Figur 1 gelangen kann. Der Hauptstrom des Gemischs ist Grundlage für den notwendigen Durchsatz durch die Vorrichtung 1; der Teilstrom dient zur eigentlichen Messung des Wasserdampfpartialdrucks und zeichnet sich zur Aufrechterhaltung günstiger Meßbedingungen durch eine geringe Gemischbewegung aus.

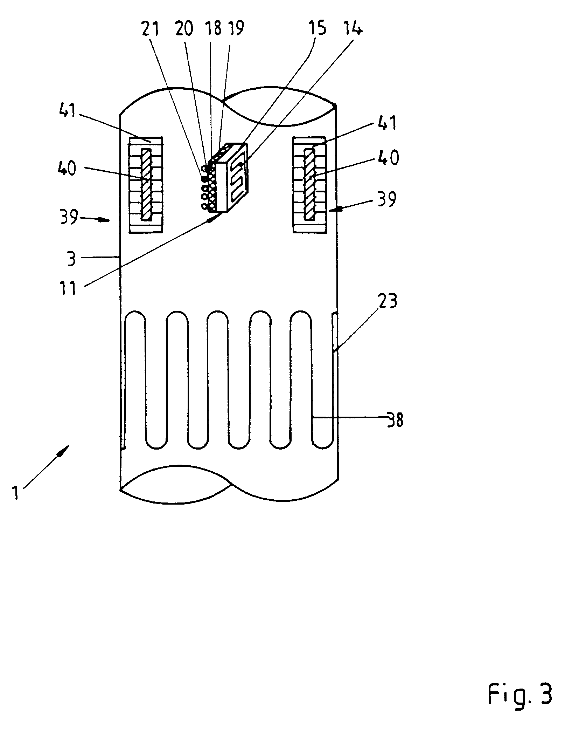

In Figur 3 ist eine Ausführungsform der Vorrichtung 1 perspektivisch und schematisch dargestellt, die deutlich von der Vorrichtung 1 gemäß Figur 1 abweicht. Die Heizung 23 ist hier in zwei separate Elemente unterteilt. Im unteren Bereich des Gemischführungsrohrs 3 ist ein Heizgitter 38 angeordnet. Die elektrolytische Zelle 18 und den Meßfühler 11 umgeben zwei Heizstrahler 39 mit Heizwendeln 40 und Reflektoren 41. Der Meßfühler 11 besteht hier aus dem Platinmeßwiderstand 14, der in den Träger 15 eingegossen ist. Der Träger 15 ist quaderförmig und an seinen beiden größten Flächen auf die Reflektoren 41 hin ausgerichtet. Von der elektrolytischen Zelle 18 ist nur eine Hälfte dargestellt. Die elektrolytische Zelle 18 weist die mit Elektrolyt 20 getränkte Glasgewebeschicht 19 sowie das Elektrodenpaar 21 auf. Die Glasgewebeschicht 19 erstreckt sich hier jeweils über die größte Fläche des Trägers 15. Das Gemisch, dessen Wasserdampfpartialdruck zu bestimmen ist, tritt unten in das Gemischführungsrohr 3 ein. Dort wird es durch das Heizgitter 38 erwärmt. Anschließend gelangt das Gemisch an die Oberfläche des Elektrolyten 20. Der Elektrolyt 20 wird durch die beiden Heizstrahler 41 beheizt, wobei das Strahlungsfeld homogen über die Ausdehnung der elektrolytischen Zelle ist. Die beiden Wirkungsweisen der Heizung 23 sind bei der vorliegenden Ausführung der Vorrichtung 1 auch räumlich getrennt. Die konvektive Aufheizung des Gemischs erfolgt durch das Heizgitter 38, während die Beheizung des Elektrolyten mittels Strahlung durch die Heizstrahler 39 durchgeführt wird. Statt der Heizstrahler 39 wären auch andere Strahlungsquellen wie z. B. eine Mikrowellenquelle denkbar.

### Bezugszeichenliste:

- 1.: Vorrichtung
- 2.: Gehäuse
- 3.: Gemischführungsrohr
- 4.: Rohrabschnitt
- 5.: Verbindungsplatte
- 6.: Durchtrittsöffnungen
- 7.: Abdeckplatte
- 8.: Anschlußstück
- 9.: Leiterplatte
- 10.: Leitungen
- 11.: Meßfühler
- 12.: Glasrohr
- 13.: temperaturempfindliches Element
- 14.: Platinmeßwiderstand
- 15.: Träger
- 16.: Meßleitungen
- 17.: Verklebung
- 18.: Zelle
- 19.: Glasgewebeschicht
- 20.: Elektrolyt
- 21.: Elektrodenpaar
- 22.: Zuleitungen
- 23.: Heizung
- 24.: Heizdraht
- 25.: untere Halteplatte
- 26.: obere Halteplatte
- 27.: Versorgungsleitungen
- 28.: Deckel
- 29.: Haltering
- 30.: Rohr
- 31.: Öffnung
- 32.: Schulter
- 33.: Schraube
- 34.: Gegenplatte
- 35.: Vorsprung
- 36.: Anschlüsse
- 37.: Schlitze
- 38.: Heizgitter
- 39.: Heizstrahler
- 40.: Heizwendel
- 41.: Reflektor

## Patentansprüche

1. Vorrichtung zur Messung des Wasserdampfpartialdrucks in Gemischen aus Wasserdampf und Gasen mit einer elektrolytischen Zelle (18), einem die Temperatur des Elektrolyten (20) bestimmenden Meßfühler (11) und einer Heizung (23), wobei die Zelle mit einer keine merkliche Erwärmung bewirkenden Wechselspannung beaufschlagt ist, der durch die Wechselspannung hervorgerufene Wechselstrom die Heizleistung der Heizung steuert und wobei der Elektrolyt (20) in direktem thermischen Kontakt auf dem Meßfühler (11) angeordnet ist, dadurch gekennzeichnet, daß die Heizung (23) geometrisch so um die elektrolytische Zelle (18) angeordnet ist und eine derartige Ausdehnung aufweist, daß sich ein homogenes Strahlungsfeld über die gesamte Zelle (18) ergibt, und daß die Heizung (23) relativ zu einer Führung für das Gasgemisch durch die Vorrichtung so angeordnet ist, daß das Gemisch im wesentlichen durch Konvektion erwärmt wird, während der Elektrolyt (20) im wesentlichen durch Strahlung erwärmt wird.

2. Vorrichtung nach Anspruch 1, dadurch gekennzeichnet, daß der Elektrolyt (20) Lithiumchlorid ist.

3. Vorrichtung nach Anspruch 1, dadurch gekennzeichnet, daß die Zelle (28) eine mit dem Elektrolyten (20) getränkte Glasgewebeschicht (19) aufweist, auf deren Oberfläche ein Elektrodenpaar (21) aus bifilar und äquidistant gewickeltem Edelmetalldraht angeordnet ist.

4. Vorrichtung nach Anspruch 1, dadurch gekennzeichnet, daß der Meßfühler (11) stabförmig ist, daß die Zelle (18) auf dem stabförmigen Meßfühler (11) ringförmig und koaxial angeordnet ist, und daß die Heizung (23) den Meßfühler (11) koaxial umgibt, wobei die Stabachse des Meßfühlers (11) parallel zur Schwerkraft verläuft.

5. Vorrichtung nach Anspruch 3, dadurch gekennzeichnet, daß die Heizung (23) Heizdrähte (24) oder Heizstreifen aufweist, die äquidistant untereinander und parallel zu der Stabachse des Meßfühlers (11) auf einem Zylindermantel angeordnet sind.

6. Vorrichtung nach Anspruch 4 oder 5, dadurch gekennzeichnet, daß die Heizung (23) von einem an beiden Enden verschlossenen, mit Durchbrechungen versehenen, koaxialen Rohr (30) umgeben ist, und daß um dieses Rohr (30) wiederum ein koaxiales Gemischführungsrohr (3) angeordnet ist.

7. Vorrichtung nach Anspruch 6, dadurch gekennzeichnet, daß die Durchbrechungen axiale, durchgehende Schlitze (37) sind.

8. Vorrichtung nach Anspruch 4, dadurch gekennzeichnet, daß eine Auswerteelektronik für den Meßfühler (11) und eine Steuerelektronik für die Heizung (23) innerhalb der Führung für das Gemisch und oberhalb der Heizung (23) angeordnet sind.

9. Vorrichtung nach Anspruch 8, dadurch gekennzeichnet, daß die Auswerte- oder die Steuerelektronik einen zusätzlichen Verbraucher aufweist.

10. Vorrichtung nach Anspruch 1, dadurch gekennzeichnet, daß der Meßfühler (11) als temperaturempfindliches Element (13) einen Platinmeßwiderstand (14) aufweist.

## Claims

1. Apparatus for the measurement of the partial pressure of water vapour in mixtures of water vapour and gases having an electrolytic cell (18), a measuring sensor (11) determining the temperature of the electrolyte (20), and a heater (23), there being applied to the cell an alternating voltage bringing about no notable heating, the alternating current induced by the alternating voltage controlling the heating output of the heater, and the electrolyte (20) being arranged in direct thermal contact with the measuring sensor (11), characterized in that the heater (23) is geometrically placed around the electrolytic cell (18) and is so extensive that a homogeneous radiation field is produced over the entire cell (18), and in that the heater (23) is arranged in relation to a guide for the mixture of the gases through the equipment in such a way that the mixture is essentially heated by convection and the electrolyte (20) is essentially heated by radiation.

2. Apparatus according to claim 1, characterized in that the electrolyte (20) is lithium chloride.

3. Apparatus according to claim 1, characterized in that the cell (18) has a glass fabric layer (19), which is impregnated with the electrolyte (20) and on the surface of which a pair of electrodes (21) of noble metal wire wound in bifilar and equidistant fashion is arranged.

4. Apparatus according to claim 1, characterized in that the measuring sensor (11) is rod-shaped, in that the cell (18) is arranged annularly and coaxially on the rod-shaped measuring sensor (11), and in that the heater (23) coaxially surrounds the measuring sensor (11), the rod axis of the measuring sensor (11) running parallel to the force of gravity.

5. Apparatus according to claim 3, characterized in that the heater (23) has heating wires (24) or heating strips, which are arranged equidistantly to one another and parallel to the rod axis of the measuring sensor (11) on a cylinder envelope.

6. Apparatus according to claim 4 or 5, characterized in that the heater (23) is surrounded by a coaxial tube (30) closed at both ends and provided with break-throughs, and in that in turn a coaxial mixture guiding tube (3) is arranged around this tube (30).

7. Apparatus according to claim 6, characterized in that the break-throughs are axial through-slits (37).

8. Apparatus according to claim 4, characterized in that evaluation electronics for the measuring sensor (11) and control electronics for the heater (23) are arranged inside the guide for the mixture and above the heater (23).

9. Apparatus according to claim 8, characterized in that the evaluation electronics or the control electronics has an additional load.

10. Apparatus according to claim 1, characterized in that the measuring sensor (11) has a platinum precision resistor (14) as temperature-sensitive element (13).

## Revendications

1. Dispositif de mesure de la tension partielle de la vapeur d'eau dans des mélanges de vapeur d'eau et de gaz, comportant une cellule électrolytique (18), une sonde de mesure (11) déterminant la température de l'électrolyte (20) et un chauffage (23), la cellule recevant une tension alternative n'entraînant pas un échauffement perceptible, le courant alternatif provoqué par la tension alternative commandant la puissance du chauffage et l'électrolyte (20) étant placé en contact thermique direct sur la sonde de mesure (11), caractérisé en ce que le chauffage (23) est disposé géométriquement autour de la cellule électrolytique (18) et présente une extension telle qu'il en résulte un champ de rayonnement homogène sur toute la cellule (18), et en ce que le chauffage (23) est disposé par rapport à un organe de guidage du mélange de gaz à travers le dispositif, de manière que le mélange soit échauffé essentiellement par convexion, tandis que l'électrolyte (20) est essentiellement chauffé par rayonnement.

2. Dispositif selon la revendication 1, caractérisé en ce que l'électrolyte (20) est du chlorure de lithium.

3. Dispositif selon la revendication 1, caractérisé en ce que la cellule (28) comporte une couche de tissu de verre (19) imprégnée d'électrolyte (20), sur la surface de laquelle est placée une paire d'électrodes (21) faites d'un fil de métal précieux bifilaire et enroulé de manière équidistante.

4. Dispositif selon la revendication 1, caractérisé en ce que la sonde de mesure (11) est en forme de barre, en ce que la cellule (18) est disposée en anneau et coaxialement sur la sonde de mesure (11) en forme de barre et en ce que le chauffage (23) entoure coaxialement la sonde de mesure (11), l'axe de la barre de la sonde de mesure (11) étant parallèle à la force de gravité.

5. Dispositif selon la revendication 3, caractérisé en ce que le chauffage (23) comporte des fils chauffants (24) ou des bandes chauffantes qui sont disposées de manière équidistante entre elles et parallèlement à l'axe de la barre de la sonde de mesure (1), sur une enveloppe cylindrique.

6. Dispositif selon la revendication 4 ou 5, caractérisé en ce que le chauffage (23) est entouré par un tube (30) coaxial, fermé aux deux extrémités, pourvu d'ajours, et en ce qu'autour de ce tube (30) est placé à nouveau un tube de guidage de mélange (3) coaxial.

7. Dispositif selon la revendication 6, caractérisé en ce que les ajours sont des fentes (37) axiales, continues.

8. Dispositif selon la revendication 4, caractérisé en ce qu'un dispositif électronique d'exploitation de la sonde de mesure (11) et un dispositif électronique de commande du chauffage (23) sont prévus à l'intérieur de l'organe de guidage du mélange et au-dessus du chauffage (23).

9. Dispositif selon la revendication 8, caractérisé en ce que le dispositif électronique d'exploitation ou le dispositif électronique de commande comporte un récepteur supplémentaire.

10. Dispositif selon la revendication 1, caractérisé en ce que la sonde de mesure (11), en tant qu'élément (13) sensible à la température, comporte une résistance de mesure en platine (14).
